# EUROPEAN PATENT SPECIFICATION

(11) **EP 3 374 262 B1**
(45) Date of publication and mention of the grant of the patent: **24.02.2021**
(21) Application number: 16864758.4
(22) Date of filing: 25.10.2016
(51) Int. Cl.: B64C 27/473, B64C 27/72, B64C 27/46, B64C 27/59, B64C 27/64, B64C 3/18

(54) **ROTOR BLADE STRUCTURES**
ROTORBLATTSTRUKTUREN
STRUCTURES D'AUBE DE ROTOR

(30) Priority: 09.11.2015 US 201562252741 P
(43) Date of publication of application: 19.09.2018
(73) Proprietor: Sikorsky Aircraft Corporation, Stratford, CT 06615 (US)
(72) Inventor: THOMAS, Justin, New Haven, CT 06512 (US); KOPANSKI, Krzysztof, Trumbull, CT 06611 (US); SCOTT, Mark W., Bethany, CT 06524 (US)
(74) Representative: Schmitt-Nilson Schraud Waibel Wohlfrom Patentanwälte Partnerschaft mbB
(86) International application number: PCT/US2016/058564
(87) International publication number: WO 2017/083089

(56) References cited:
- EP-A1- 1 630 097
- WO-A1-2015/013503
- DE-A1- 2 900 834
- GB-A- 1 006 111
- US-A- 3 155 166
- US-A- 3 765 124
- US-A- 3 765 124
- US-A1- 2008 135 677
- US-A1- 2012 104 153
- US-A1- 2013 022 463
- US-B1- 6 196 796
- US-B1- 7 708 229
- US-B1- 7 708 229

## Description

This invention was made with government support under contract no. No. FA8650-13-C-7304 awarded by DARPA. The United States government has certain rights in the invention.

The present disclosure relates to rotor blade assemblies, more specifically to rotor blade assemblies having trailing edge devices (e.g., flaps) or other actuated mechanisms.

For a rotor blade, trailing edge (TE) devices can be used that move relative to the blade. Certain TE devices include pneumatically driven valves. The inclusion of TE devices and the supporting pneumatic conduits in traditional blades add complexity to manufacture and maintenance.

Such conventional methods and systems have generally been considered satisfactory for their intended purpose. However, there is still a need in the art for improved rotor blade structures. The present disclosure provides a solution for this need.

US 6 196 796 B1 discloses an actuation system for pivoting a flap on a helicopter rotor blade to reduce the interaction of the blade with the preceding blade vortex. The actuation system includes a fluid supply which is connected to first and second fluid supply lines. The fluid supply lines convey flows of pressurized fluid from the fluid supply to an actuator. The actuator includes a housing mounted within the rotor blade and having a channel formed in it. A butterfly shaft is pivotally mounted within the channel and has laterally extending arms which separate the channel into four lobes. A first port connects the first fluid supply line with two diametrically opposed lobes in the channel. A second port connects the second fluid supply line with the other two diametrically opposed lobes in the channel. A torque coupling is attached to the butterfly shaft and engaged with the flap such that rotation of the torque coupling produces concomitant rotation of the flap. The pressurization of the first fluid supply line causes the torque coupling to rotate in a first direction. The pressurization of the second supply fluid line causes the torque coupling to rotate in the opposite direction.

The invention relates to a closeout structure for a rotor blade according to the appended claims. In particular, a closeout structure for a rotor blade includes a first fluid channel having a first port which supplies a first pressure to the TE device via the first port, a second fluid channel having a second port which supplies a second pressure to the TE device via the second port, and a trough which forms a seal between the first and second channels. The closeout structure forms a double-W shape as specified in claim 1.

The first and second W-shaped members can be adhered together. The first W-shaped member can include at least one hole in the first and second fluid channels for ports to fluidly communicate the first and second fluid channels and the ports.

The closeout structure can have a length as long as a blade interior of the rotor blade. In certain embodiments, the first channel can be sealed at a tip end and the second fluid channel can be sealed at a root end.

According to another aspect, a rotor blade includes a trailing edge (TE) device disposed within the rotor blade and configured to operate with a differential pressure, the TE device including a first port and a second port. The rotor blade includes a cavity extending at least a portion of the length of the rotor blade. The rotor blade further includes a closeout structure as described herein disposed in the cavity. The rotor blade can include a valve which selectively opens and closes the first and/or second ports to selectively activate the TE device.

According to another aspect, a rotorcraft includes a plurality of rotor blades as described above. The rotorcraft can further include a controller which controls the TE by selectively applying differential pressure via the first fluid channel and the second fluid channel. The rotorcraft can include a valve which selectively opens and closes the first and/or second ports to selectively activate the TE device.

These and other features of the systems and methods of the subject disclosure will become more readily apparent to those skilled in the art from the following detailed description taken in conjunction with the drawings.

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1A is a plan view of an embodiment of a rotor blade in accordance with this disclosure;
Fig. 1B is a cross-sectional end view of the blade of Fig. 1A, showing a closeout structure disposed within a blade cavity;
Fig. 1C is a cross-sectional elevational view of a portion of the closeout structure of Fig. 1B;
Fig. 1D is a plan view of a root portion of the blade of Fig. 1A, showing a root pressure opening;
Fig. 1E is a plan view of a tip portion of the blade of Fig. 1A, showing a tip pressure opening;
Fig. 2A is a partial cross-sectional view of an embodiment of trailing edge device shown operatively connected to an embodiment of a closeout structure;
Fig. 2B is a partial cross-sectional view of another embodiment of a closeout structure associated with a trailing edge device, shown having forward nut plates and core material; and
Fig. 3 is a side elevation view of an embodiment of a rotorcraft in accordance with this disclosure.

### DETAILED DESCRIPTION

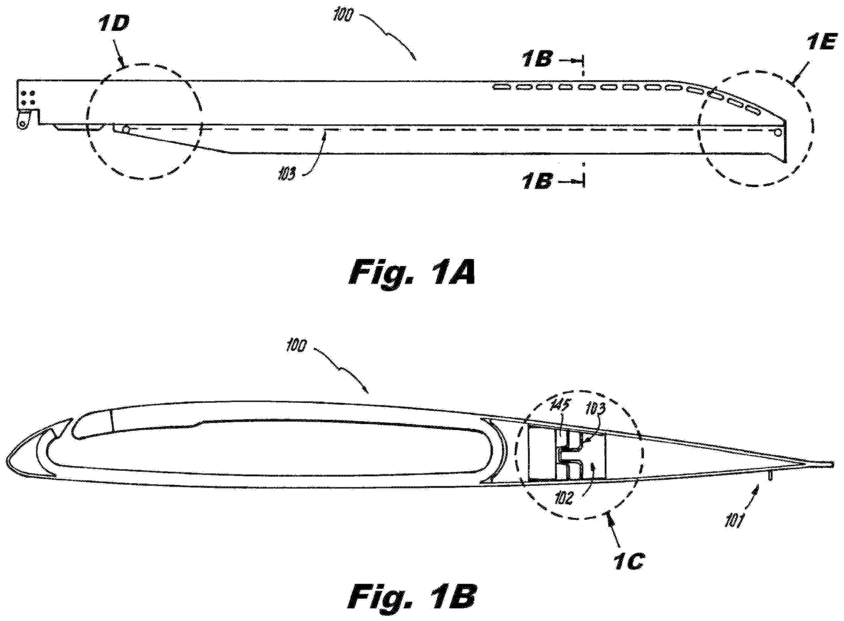

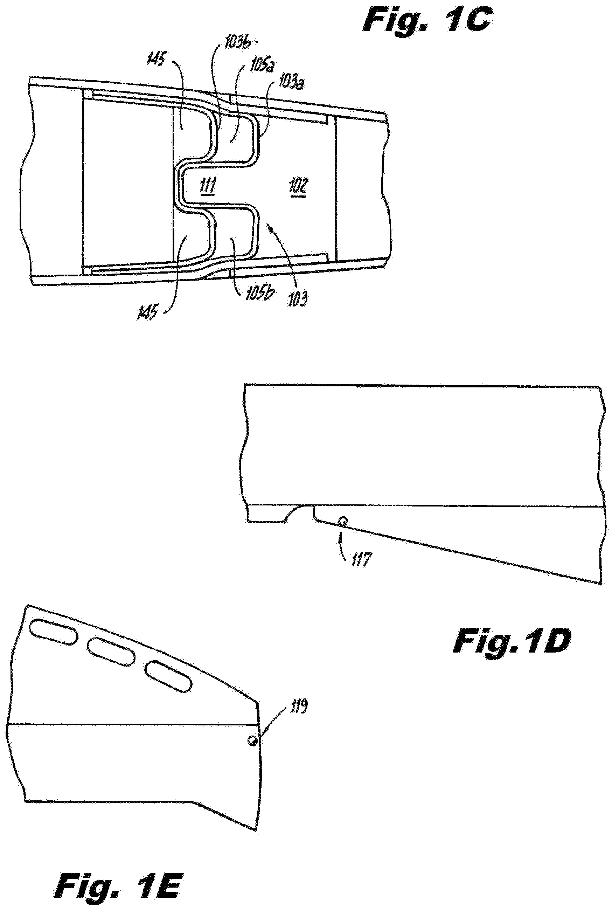

Reference will now be made to the drawings wherein like reference numerals identify similar structural features or aspects of the subject disclosure. For purposes of explanation and illustration, and not limitation, an illustrative view of an embodiment of a blade in accordance with the disclosure is shown in Fig. 1A and is designated generally by reference character 100. Other embodiments and/or aspects of this disclosure are shown in Figs. 1B-3. The systems and methods described herein can be used to provide a differential pressure to a trailing edge (TE) device.

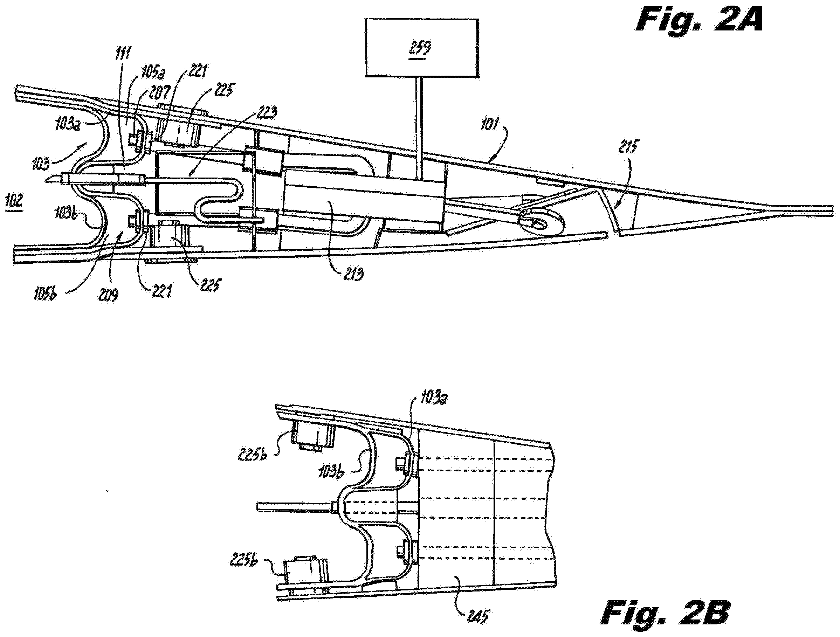

Referring to Fig. 1A-1E, a rotor blade 100 can include a trailing edge (TE) device 101 disposed within the rotor blade 100. The TE device 101 can be configured to operate with a differential pressure. The rotor blade 100 can define a cavity 102 (e.g., in an aft portion of blade 100 forward of the TE device 101). In certain embodiments, the cavity 102 can be at least partially filled with core material 145 (also see core material 245 in Fig. 2B), which can include any suitable material (e.g., foam).

As shown in Fig. 1B and 1C, a closeout structure 103 for a rotor blade 100 can include a first fluid channel 105a and a second fluid channel 105b. The closeout structure 103 can be configured to fit within at least a portion of the cavity 102. As shown, a trough 111 is disposed between the first fluid channel 105a and the second fluid channel 105b such that the closeout structure 103 forms a double-W shape. As shown, the core material 145 can be shaped to

Referring to Fig. 2A, the first fluid channel 105a is configured to supply a first pressure fluid to a first port 207 of the TE device 101. The second fluid channel 105b is configured to supply a second pressure fluid to a second port 209 of the TE device 101, with a pressure differential between the first and second pressures powering the TE device 101. In certain embodiments, the first fluid channel 105a can convey a higher pressure to the first port 207 than that conveyed to the second port 209 by the second fluid channel 105b, and the fluid can be air.

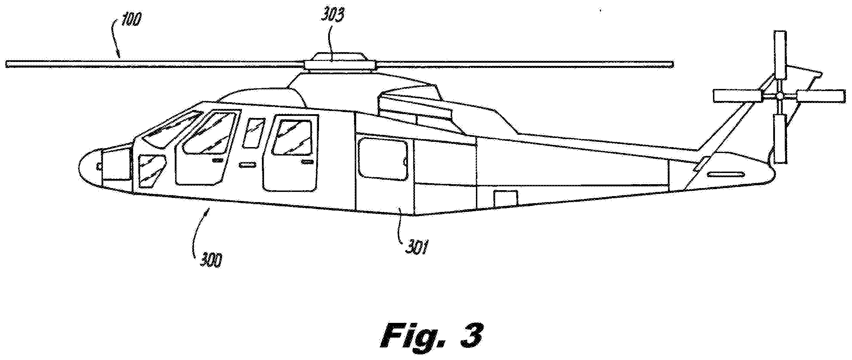

For example, referring additionally to Fig. 1D, the first fluid channel 105a can be in fluid communication with a root pressure opening 117 at a root portion of the blade 100 which has a relatively high pressure during operation. Referring additionally to Fig. IE, the second fluid channel 105b can be in fluid communication with a tip pressure opening 119 at the tip of the blade 100 which has a relatively low pressure during operation. In this manner, the first channel can be sealed at a tip end of the blade 100 and the second fluid channel can be sealed at a root end of the blade 100. A differential pressure valve 213 of the TE device 101 can actuate a TE device effector (e.g., flap 215) when a suitable differential pressure acts on the valve 213 between the ports 207, 209 (e.g., due to a differential pressure between the root and the tip of the blade 100 when rotating). Electrical components 223 can be operatively connected to the TE device 101 to selectively control the valve 213 (e.g., via a suitable controller 259 disposed on the blade 100. on the rotor hub 303 as shown in Fig. 3, and/or in the fuselage 301 as shown in Fig. 3 such as in a flight control computer) to actuate in response to a differential pressure.

As shown in Figs. 1B, 1C, and 2A, the closeout structure 103 can be defined by a first W-shaped member 103a and a second W-shaped member 103b. The second W-shaped member 103b can be nested at least partially within the first W-shape member 103a to form the double W-shape. As shown, the second W-shaped member 103b can have a shallower second member trough than a first member trough of the first W-shaped member 103a such that the first and second fluid channels 105a, 105b are formed between the first W-shaped member 103a and the second W-shaped member 103b. The first member trough can bottom out on the second member trough, thereby sealing the first and second fluid channels 105a, 105b.

Each W-shaped member 103a, 103b can be made of composite material (e.g., carbon fiber) and/or include any other suitable material (e.g., aluminum sheet metal). The first and second W-shaped members 103a, 103b can be adhered/bonded together at any suitable portion thereof (e.g., along the side walls, along the trough, and/or any other location), or assembled in any other suitable manner. Any other suitable arrangement to form the double W-shape is contemplated herein. For example, the closeout structure 103 can be made as a single piece (e.g., via casting or additive manufacturing), or out of any other suitable number of components.

The closeout structure 103 can be connected to the inside of the blade 100 in any suitable manner (e.g., via adhesive, via TE device nut plates 225). As shown in Fig. 2A, the nut plates 225 can be positioned aft of the closeout structure 103. However, as shown in Fig. 2B, the nut plates 225a can be moved forward (toward leading edge of blade 100) forward of fluid channels 105a, 105b. Placing the nut plates 225a forward can assist in resisting negative impact of local bending forces. It is contemplated that the blade 100 can be formed integrally with the closeout structure 103.

The first W-shaped member 103a can include at least one hole in the first and second fluid channels 105a, 105b for ports 207, 209 to fluidly communicate the first fluid channel 105a and the port 207, and second fluid channel 105b and the port 209. A suitable seal 221 can be disposed within the holes and around each port 207, 209 to seal the channels 105a, 105b from the cavity 102. The closeout structure 103 can have a length as long as a blade interior (e.g., the cavity 102) of the rotor blade 100.

Referring to Fig. 3, a rotorcraft 300 can include a plurality of rotor blades 100 as described above attached to a rotor hub 303 which is rotatable connected to a fuselage 301. The rotor blades 100 can include a TE device and closeout structure 103 as described above. While the rotorcraft 300 is shown as a single rotor helicopter, any suitable rotorcraft can employ one or more blades 100 as described above. By way of example, aspects of the invention can be used in coaxial helicopters, on tail rotors, or wings or propeller blades on fixed or tilt wing aircraft.

As described above, the two channels 105a, 105b provide the valve of the TE device 101 with access to high and low pressure air. Referring to Fig. 2, the trough 111 provides space for the electrical components 223 (e.g., wires and connectors). Traditional designs do not support integration of a TE device 101 including conduits for wires and sources for pressure. The double-W geometry of the closeout structure 103 as described above is a low weight and effective solution to this problem.

The methods and systems of the present disclosure, as described above and shown in the drawings, provide for blades and components thereof with superior properties including structures for supporting trailing end devices. While the apparatus and methods of the subject disclosure have been shown and described with reference to embodiments, those skilled in the art will readily appreciate that certain changes and/or modifications may be made thereto without departing from the scope of the claims.

## Claims

1. A closeout structure (103) for a rotor blade (100) having a trailing edge (TE) device (101), the closeout structure (103) comprising:
a first fluid channel (105a) having a first port (207) which is configured to supply a first pressure to the TE device (101) via the first port (207);
a second fluid channel (105b) having a second port (209) which is configured to supply a second pressure to the TE device (101) via the second port (209); and
a trough (111) which forms a seal between the first fluid channel (105a) and the second fluid channel (105b), wherein the closeout structure (103) is defined by a first W-shaped member (103a) and a second W-shaped member (103b) nested at least partially within the first W-shape member (103a) to form a double W-shape, wherein the second W-shaped member (103b) has a shallower second member trough than a first member trough of the first W-shaped member (103a) such that the first and second fluid channels (105a, 105b) are formed between the first W-shaped member (103a) and the second W-shaped member (103b).

2. The structure (103) of claim 1, wherein the first and second W-shaped members (103a, 103b) are adhered together.

3. The structure (103) of any of claims 1 or 2, wherein the first W-shaped member (103a) includes at least one hole in the first and second fluid channels (105a, 105b) for ports (207, 209) to fluidly communicate the first and second fluid channels (105a, 105b) and the ports (207, 209).

4. The structure (103) of any of the previous claims, wherein the structure (103) has a length as long as a blade interior of the rotor blade (100).

5. The structure (103) of any of the previous claims, wherein the first fluid channel (105a) is sealed at a tip end of the rotor blade (100) and open at a root end of the rotor blade (100) and the second fluid channel (105b) is sealed at the root end of the rotor blade (100) and open at the tip end of the rotor blade (100).

6. A rotor blade (100), comprising:
an airfoil having a leading edge and a trailing edge and which extends from a root end to a tip end, the airfoil having a cavity (102) extending at least a portion of a length of the airfoil between the root and tip ends;
a trailing edge (TE) device (101) disposed within the rotor blade (100) substantially at the trailing edge and configured to operate with a differential pressure, the TE device (101) including a first port (207) and a second port (209); and
a closeout structure (103) according to one of the preceding claims disposed in the cavity (102), comprising:
the first fluid channel (105a) for supplying the first pressure to the first port (207) of the TE device (101);
the second fluid channel (105b) for supplying the second pressure to the second port (209) of the TE device (101), the second pressure being other than the first pressure to create the differential pressure.

7. The blade (100) of claim 6, further comprising a valve (213) which selectively opens and closes the first and/or second ports (207, 209) to selectively activate the TE device (101).

8. A rotorcraft (300), comprising:
a fuselage (301);
a rotor hub (303) rotatably disposed on the fuselage (301); and
a plurality of rotor blades (100) connected to the rotor hub (303), each blade (100) including:
a trailing edge (TE) device (101) disposed within the rotor blade (100) substantially at the trailing edge and configured to operate with a differential pressure, the TE device (101) including a first port (207) and a second port (209); and
a closeout structure (103) according to one of the claims 1 to 5 disposed in the cavity (102), comprising:
the first fluid channel (105a) for supplying the first pressure to the first port (207) of the TE device (101);
the second fluid channel (105b) for supplying the second pressure to the second port (209) of the TE device (101), the second pressure being other than the first pressure to create the differential pressure.

9. The rotorcraft (300) of claim 8, further comprising a controller (259) which controls the TE device (101) by selectively applying differential pressure via the first fluid channel (105a) and the second fluid channel (105b).

10. The rotorcraft (300) of any of the claims 8 or 9, further comprising a valve (213) which selectively opens and closes the first and/or second ports (207, 209) to selectively activate the TE device (101).

## Patentansprüche

1. Abschlussstruktur (103) für ein Rotorblatt (100), das eine Hinterkanten(trailing edge -TE)-Vorrichtung (101) aufweist, wobei die Abschlussstruktur (103) Folgendes umfasst:
einen ersten Fluidkanal (105a), der einen ersten Anschluss (207) aufweist und der so konfiguriert ist, dass er der TE-Vorrichtung (101) einen ersten Druck über den ersten Anschluss (207) bereitstellt;
einen zweiten Fluidkanal (105b), der einen zweiten Anschluss (209) aufweist und der so konfiguriert ist, dass er der TE-Vorrichtung (101) einen zweiten Druck über den zweiten Anschluss (209) bereitstellt; und
eine Mulde (111), die eine Dichtung zwischen dem ersten Fluidkanal (105a) und dem zweiten Fluidkanal (105b) bildet, wobei die Abschlussstruktur (103) durch ein erstes W-förmiges Element (103a) und ein zweites W-förmiges Element (103b), das mindestens teilweise in das erste W-förmige Element (103a) geschachtelt ist, so dass sie eine Doppel-W-Form bilden, definiert wird, wobei das zweite W-förmige Element (103b) eine flachere Mulde des zweiten Elements als eine Mulde des ersten Elements des ersten W-förmigen Elements (103a) aufweist, so dass der erste und der zweite Fluidkanal (105a, 105b) zwischen dem ersten W-förmigen Element (103a) und dem zweiten W-förmigen Element (103b) ausgebildet sind.

2. Struktur (103) nach Anspruch 1, wobei das erste und das zweite W-förmige Element (103a, 103b) zusammengeklebt sind.

3. Struktur (103) nach einem der Ansprüche 1 oder 2, wobei das erste W-förmige Element (103a) mindestens ein Loch in dem ersten und dem zweiten Fluidkanal (105a, 105b) für Anschlüsse (207, 209) beinhaltet, um eine Fluidkommunikation zwischen dem ersten und dem zweiten Fluidkanal (105a, 105b) und den Anschlüssen (207, 209) herzustellen.

4. Struktur (103) nach einem der vorstehenden Ansprüche, wobei die Struktur (103) eine Länge aufweist, die so lang wie ein Blattinneres des Rotorblatts (100) ist.

5. Struktur (103) nach einem der vorstehenden Ansprüche, wobei der erste Fluidkanal (105a) an einem Spitzenende des Rotorblatts (100) abgedichtet ist und an einem Fußende des Rotorblatts (100) offen ist und der zweite Fluidkanal (105b) am Fußende des Rotorblatts (100) abgedichtet ist und an dem Spitzenende des Rotorblatts (100) offen ist.

6. Rotorblatt (100), umfassend:
ein Blattprofil, das eine Vorderkante und eine Hinterkante aufweist und das sich von einem Fußende zu einem Spitzenende erstreckt, wobei das Blattprofil einen Hohlraum (102) aufweist, der sich mindestens einen Abschnitt einer Länge des Blattprofils zwischen dem Fußende und dem Spitzenende erstreckt;
eine Hinterkanten(TE)-Vorrichtung (101), die innerhalb des Rotorblatts (100) im Wesentlichen an der Hinterkante angeordnet ist und so konfiguriert ist, dass sie mit einer Druckdifferenz arbeitet, wobei die TE-Vorrichtung (101) einen ersten Anschluss (207) und einen zweiten Anschluss (209) beinhaltet; und
eine Abschlussstruktur (103) nach einem der vorstehenden Ansprüche, die in dem Hohlraum (102) angeordnet ist und die Folgendes umfasst:
den ersten Fluidkanal (105a) zum Bereitstellen des ersten Drucks zum ersten Anschluss (207) der TE-Vorrichtung (101);
den zweiten Fluidkanal (105b) zum Bereitstellen des zweiten Drucks zum zweiten Anschluss (209) der TE-Vorrichtung (101), wobei der zweite Druck sich von dem ersten Druck unterscheidet, um die Druckdifferenz zu erzeugen.

7. Blatt (100) nach Anspruch 6, ferner ein Ventil (213) umfassend, das den ersten und/oder den zweiten Anschluss (207, 209) selektiv öffnet und schließt, um die TE-Vorrichtung (101) selektiv zu aktivieren.

8. Drehflügler (300), umfassend:
einen Rumpf (301);
eine Rotornabe (303), die drehbar an dem Rumpf (301) angeordnet ist; und
eine Vielzahl von Rotorblättern (100), die mit der Rotornabe (303) verbunden sind, wobei jedes Blatt (100) Folgendes beinhaltet:
eine Hinterkanten(TE)-Vorrichtung (101), die innerhalb des Rotorblatts (100) im Wesentlichen an der Hinterkante angeordnet ist und so konfiguriert ist, dass sie mit einem Differenzdruck arbeitet, wobei die TE-Vorrichtung (101) einen ersten Anschluss (207) und einen zweiten Anschluss (209) beinhaltet; und
eine Abschlussstruktur (103) nach einem der Ansprüche 1 bis 5, die in dem Hohlraum (102) angeordnet ist und Folgendes umfasst:
den ersten Fluidkanal (105a) zum Bereitstellen des ersten Drucks zum ersten Anschluss (207) der TE-Vorrichtung (101);
den zweiten Fluidkanal (105b) zum Bereitstellen des zweiten Drucks zum zweiten Anschluss (209) der TE-Vorrichtung (101), wobei sich der zweite Druck von dem ersten Druck unterscheidet, um die Druckdifferenz zu erzeugen.

9. Drehflügler (300) nach Anspruch 8, ferner eine Steuerung (259) umfassend, die die TE-Vorrichtung (101) durch selektives Anlegen einer Druckdifferenz über den ersten Fluidkanal (105a) und den zweiten Fluidkanal (105b) steuert.

10. Drehflügler (300) nach einem der Ansprüche 8 oder 9, ferner ein Ventil (213) umfassend, das den ersten und/oder den zweiten Anschluss (207, 209) selektiv öffnet und schließt, um die TE-Vorrichtung (101) selektiv zu aktivieren.

## Revendications

1. Structure (103) d'enveloppe pour une aube de rotor (100) ayant un dispositif de bord de fuite (TE) (101), la structure (103) d'enveloppe comprenant :
un premier canal de fluide (105a) ayant un premier port (207) qui est conçu pour fournir une première pression au dispositif de TE (101) via le premier port (207) ;
un second canal de fluide (105b) ayant un second port (209) qui est conçu pour fournir une seconde pression au dispositif de TE (101) via le second port (209) ; et
un conduit (111) qui forme un scellement entre le premier canal de fluide (105a) et le second canal de fluide (105b), dans laquelle la structure (103) d'enveloppe est définie par un premier élément en forme de W (103a) et un second élément en forme de W (103b) inséré au moins en partie dans le premier élément en forme de W (103a) pour former une double forme de W, dans laquelle le second élément en forme de W (103b) a un conduit de second élément davantage peu profond qu'un conduit de premier élément du premier élément en forme de W (103a) de sorte que les premier et second canaux de fluide (105a, 105b) soient formés entre le premier élément en forme de W (103a) et le second élément en forme de W (103b).

2. Structure (103) selon la revendication 1, dans laquelle les premier et second éléments en forme de W (103a, 103b) adhèrent ensemble.

3. Structure (103) selon l'une quelconque des revendications 1 ou 2, dans laquelle le premier élément en forme de W (103a) inclut au moins un trou dans les premier et second canaux de fluide (105a, 105b) pour des ports (207, 209) pour faire communiquer de manière fluidique les premier et second canaux de fluide (105a, 105b) et les ports (207, 209).

4. Structure (103) selon l'une quelconque des revendications précédentes, dans laquelle la structure (103) a une longueur aussi longue qu'un intérieur d'aube de l'aube de rotor (100).

5. Structure (103) selon l'une quelconque des revendications précédentes, dans laquelle le premier canal de fluide (105a) est scellé à une extrémité d'aube de l'aube de rotor (100) et ouvert à un pied d'aube de l'aube de rotor (100) et le second canal de fluide (105b) est scellé au pied d'aube de l'aube de rotor (100) et ouvert à l'extrémité d'aube de l'aube de rotor (100).

6. Aube de rotor (100), comprenant :
un profil d'aile ayant un bord d'attaque et un bord de fuite et qui se prolonge depuis un pied d'aube jusqu'à une extrémité d'aube, le profil d'aile ayant une cavité (102) se prolongeant au moins au niveau d'une partie d'une longueur du profil d'aile entre le pied d'aube et l'extrémité d'aube ;
un dispositif de bord de fuite (TE) (101) disposé dans l'aube de rotor (100) sensiblement au niveau du bord de fuite et conçu pour fonctionner avec une pression différentielle, le dispositif de TE (101) incluant un premier port (207) et un second port (209) ; et
une structure (103) d'enveloppe selon l'une des revendications précédentes disposée dans la cavité (102), comprenant :
le premier canal de fluide (105a) permettant de fournir la première pression au premier port (207) du dispositif de TE (101) ;
le second canal de fluide (105b) permettant de fournir la seconde pression au second port (209) du dispositif de TE (101), la seconde pression étant différente de la première pression pour créer la pression différentielle.

7. Aube (100) selon la revendication 6, comprenant en outre une vanne (213) qui ouvre et ferme de manière sélective les premier et/ou second ports (207, 209) pour activer de manière sélective le dispositif de TE (101).

8. Giravion (300), comprenant :
un fuselage (301) ;
un moyeu de rotor (303) disposé de manière rotative sur le fuselage (301) ; et
une pluralité d'aubes de rotor (100) reliées au moyeu de rotor (303), chaque aube (100) incluant :
un dispositif de bord de fuite (TE) (101) disposé dans l'aube de rotor (100) sensiblement au niveau du bord de fuite et conçu pour fonctionner avec une pression différentielle, le dispositif de TE (101) incluant un premier port (207) et un second port (209) ; et
une structure (103) d'enveloppe selon l'une des revendications 1 à 5 disposée dans la cavité (102), comprenant :
le premier canal de fluide (105a) permettant de fournir la première pression au premier port (207) du dispositif de TE (101) ;
le second canal de fluide (105b) permettant de fournir la seconde pression au second port (209) du dispositif de TE (101), la seconde pression étant différente de la première pression pour créer la pression différentielle.

9. Giravion (300) selon la revendication 8, comprenant en outre un dispositif de commande (259) qui commande le dispositif de TE (101) en appliquant de manière sélective une pression différentielle via le premier canal de fluide (105a) et le second canal de fluide (105b).

10. Giravion (300) selon l'une quelconque des revendications 8 ou 9, comprenant en outre une vanne (213) qui ouvre et ferme de manière sélective les premier et/ou second ports (207, 209) pour activer de manière sélective le dispositif de TE (101).
